# FASCICULE DE BREVET EUROPEEN

(11) **EP 3 864 317 B1**
(45) Date de publication et mention de la délivrance du brevet: **28.12.2022**
(21) Numéro de dépôt: 19868190.0
(22) Date de dépôt: 27.11.2019
(51) Int. Cl.: F16D 65/54

(54) **RESSORT DE RAPPEL DE PLAQUETTE DE FREIN A PRECHARGE AUTOMATIQUE ET PROCÉDÉ DE FABRICATION D'UN FREIN A DISQUE COMPORTANT DE TELS RESSORTS**
SELBST-EINSTELLBARE RÜCKSTELLFEDER FÜR EINEN BREMSKLOTZ UND VERFAHREN ZUR FERTIGUNG EINER SOLCHE FEDERN EINSCHLIESSENDEN SCHEIBENBREMSE
SELF-ADJUSTING BRAKE PAD RETURN SPRING AND METHOD FOR MANUFACTURING A DISC BRAKE COMPRISING SUCH SPRINGS

(30) Priorité: 29.11.2018 FR 1872090
(43) Date de publication de la demande: 18.08.2021
(73) Titulaire: Hitachi Astemo France, 93700 Drancy (FR)
(72) Inventeur: KONGO KONDE, Ange, 49100 ANGERS (FR); ESNEE, Didier, 72000 LE MANS (FR); BONNEC, Jean-Louis, 49130 LES PONTS DE CE (FR); LABARRE, Xavier, 49250 SAINT GEORGES DU BOIS (FR); CHAIGNEAU, Fabien, 49190 ROCHEFORT SUR LOIRE (FR)
(74) Mandataire: Brevalex
(86) Numéro de dépôt international: PCT/FR2019/052824
(87) Numéro de publication internationale: WO 2020/109728

(56) Documents cités:
- EP-A1- 3 006 763
- WO-A1-2014/029840
- FR-A1- 3 033 378
- JP-A- 2007 315 577
- US-A1- 2016 102 722

## Description

### DOMAINE TECHNIQUE ET ÉTAT DE LA TECHNIQUE ANTÉRIEURE

La présente invention se rapporte à un ressort de rappel de plaquette de frein à précharge automatique à une plaquette de frein comportant de tels ressorts et à un procédé de fabrication d'un frein à disque.

Un exemple de frein à disque comporte une chape destinée à être fixée à un porte-fusée d'un véhicule automobile, un étrier monté flottant par rapport à la chape, deux plaquettes de frein destinées à venir en contact avec un disque de frein fixé à une roue. L'étrier comporte un piston qui peut être déplacé sous l'action d'un fluide sous pression pour appliquer une des plaquettes contre une face du disque de frein. Par réaction, l'étrier coulisse et actionne l'autre plaquette contre l'autre face du disque de frein.

Lorsque la pression est relâchée, le piston recule et permet à la plaquette en contact avec celui-ci de s'écarter du disque de frein, la force de freinage s'annule. L'autre plaquette s'écarte également de l'autre face du disque du fait du voile du disque.

Les plaquettes de frein peuvent être équipées de ressorts de rappel, deux par plaquette, qui sont fixés sur la chape et assurent un recul suffisant des plaquettes par rapport au disque pour éviter un freinage résiduel. Ces ressorts suivent également l'usure des plaquettes, de sorte que la distance entre la surface de la garniture et le disque reste sensiblement constante, quel que soit le niveau d'usure de la garniture. Le ressort remplit cette fonction en se déformant plastiquement pour limiter le recul des plaquettes. Un tel ressort est décrit dans le document FR3027080 (EP3006763A1).

Le ressort comporte une portion de fixation au frein à disque, par exemple la chape, et une portion de fixation à la plaque du patin de frein, les deux portions de fixation étant reliées par une forme sensiblement en V, les deux branches du V comportent chacune un pli. Le ressort comporte un pli entre chaque portion de fixation et une branche du V, un pli entre les deux branches du V, et un pli dans chaque branche du V. Au fur et à mesure de l'usure de la garniture, le ressort se déforme plastiquement au niveau des plis, les différentes portions du ressort reliées par les plis changent d'orientation relative.

Le ressort est par exemple réalisé par pliage d'une bande métallique. Les plis sont formés par pliage lors de la fabrication du ressort.

Ce ressort donne satisfaction. Cependant il a été constaté que lors des premières applications les ressorts de rappel ne sont pas actifs, i.e. ils n'assurent pas leur fonction de rappel. L'activation des ressorts n'apparait qu'après plusieurs applications.

### EXPOSÉ DE L'INVENTION

C'est par conséquent un but de la présente invention d'offrir un ressort de rappel de patin de frein qui est actif dès sa première utilisation.

C'est également un but de la présente invention d'offrir un procédé de fabrication d'un frein à disque assurant une activation immédiate des ressorts de rappel.

Le but précédemment énoncé est atteint par un ressort de rappel de patin de frein comportant une portion de fixation au frein à disque, une portion de fixation à la plaque du patin de frein, une portion en V reliant les deux portions de fixation, la branche du V du côté de la portion de fixation au frein à disque étant sensiblement droite. En outre, avant son premier montage, l'angle entre les branches du V est sensiblement plus grand que l'angle formé par les branches du V lorsque le ressort est fixé sur le frein par la portion de fixation.

Lors du montage, le ressort est déjà fixé sur la plaque du patin de frein, et la garniture est en contact du disque ou d'une pièce assimilée à un disque de frein, le ressort est alors déformé afin de rapprocher la portion de fixation du frein à disque. Ce rapprochement a pour effet de déformer plastiquement la branche du côté de la portion de fixation au frein et de former un pli. Lors de la fixation du ressort sur le frein, le ressort est activé, i.e. il est préchargé. Il en résulte que, dès la première application de freinage, le ressort de rappel assure sa fonction de rappel.

De préférence la branche du la portion en V du côté de la portion de fixation à la plaque de garniture comporte un pli formé à la fabrication du ressort et présent avant le montage du patin de frein sur le frein.

De manière avantageuse l'angle, à l'extérieur du ressort, entre les deux bandes de part et d'autre du pli formé lors du montage est compris entre 5° et 25°.

Par exemple, la portion de fixation au frein comporte des moyens de fixation par encliquetage sur un bossage d'un point fixe du frein à disque, par exemple une chape.

Par exemple, la portion de fixation sur la plaque du patin de frein permet une fixation par rivetage.

Le patin de frein comporte deux ressorts de rappel selon l'invention.

La présente invention a alors pour objet un ressort de rappel d'un patin de frein à disque destiné à être monté entre le patin et un point fixe, ledit ressort étant configuré pour, après montage dans le frein à disque, se déformer élastiquement de sorte à rappeler le patin de frein en une position reculée par rapport au disque de frein après une phase de freinage, et à se déformer plastiquement pour compenser l'usure d'un ensemble formé par le disque de frein et d'une garniture du patin de frein, dans lequel le ressort comporte une première portion de fixation au patin de frein, un deuxième portion de fixation au point fixe, et une troisième portion reliant la première portion de fixation et la deuxième portion de fixation, ladite troisième portion ayant sensiblement la forme d'un V comportant une première branche et une deuxième branche reliées par un premier pli, les extrémités libres des première et deuxième branches respectivement étant reliées respectivement à la première portion de fixation et à la deuxième portion de fixation, dans lequel la première branche comporte un deuxième pli transversal à un axe longitudinal de la première branche de sorte que la première branche comporte deux parties dans deux plans différents, et dans lequel, avant montage, la deuxième branche est sensiblement plane et est telle que, lors de la fixation de la deuxième portion de fixation sur le point fixe, ladite deuxième branche se déforme plastiquement le long d'un troisième pli de sorte que la deuxième branche après montage comporte deux parties dans deux plans différents.

De préférence, l'angle saillant entre la première et la deuxième branche est au moins égal à 10°.

Dans un exemple avantageux, la face de la première portion de fixation destinée à venir en appui sur le patin de frein et la face de la deuxième portion de fixation destinée à venir en appui sur le point fixe sont séparées d'une distance comprise entre 2 mm et 15 mm et l'angle formé entre les deux parties de la deuxième branche après formation du troisième pli est compris entre 10° et 25°.

De manière préférée, la deuxième branche comporte des moyens de localisation pour localiser le troisième pli à un emplacement donné.

Dans un exemple de réalisation, les moyens de localisation comportent une fenêtre s'étendant le long de l'axe du troisième pli.

Dans un autre exemple de réalisation, les moyens de localisation comportent deux encoches formées dans des bords latéraux de la deuxième branche alignées le long de l'axe du troisième pli, ou un marquage mécanique de la deuxième branche le long de l'axe du troisième pli.

Selon une caractéristique additionnelle, la première branche comporte une fenêtre au niveau du deuxième pli et dans lequel une fenêtre est formée au niveau du premier pli.

Selon une autre caractéristique additionnelle, la deuxième portion de fixation comporte une pince destinée à se fixer sur le point fixe par encliquetage.

La présente invention a également pour objet un patin de frein comportant une plaque support, une garniture de freinage fixée sur une face de la plaque support et deux ressorts de rappel selon la présente invention, lesdits ressorts de rappel étant fixés sur une face de la plaque support opposée à celle portant la garniture de freinage, par la première portion de fixation.

De préférence, les ressorts de rappel sont sertis sur la plaque support.

La présente invention a également pour objet un frein à disque comportant un actionneur et deux patins de frein selon l'invention.

L'angle entre les deux parties de la deuxième branche est de préférence compris entre 10° et 13°.

Le frein à disque comporte une chape destinée à être fixée sur un porte-fusée d'un véhicule automobile et un étrier flottant, lesdits ressorts étant fixés sur l'étrier par leur deuxième portion de fixation.

Dans un exemple de réalisation, l'étrier comporte des bossages coopérant avec les deuxièmes portions de fixation par encliquetage.

La présente invention a également pour objet un procédé de fabrication d'un frein à disque selon l'invention, comportant :
- la mise en place d'au moins un patin de frein dans le frein à disque,
- la mise en appui de la garniture contre une face d'une pièce formant un disque de frein ou simulant un disque de frein,
- le rapprochement de la deuxième portion de fixation de chaque ressort vers un point fixe, et déformation plastique simultanée de la deuxième branche de sorte à faire apparaître le deuxième pli et à précharger chaque ressort la présente invention a également pour objet un procédé de conception d'un ressort de rappel selon l'invention, d'un patin de frein dans un frein à disque donné, connaissant la distance entre la face arrière du patin de frein et la face d'appui de la première portion de fixation sur le point fixe :
- détermination de la précharge à appliquer au ressort,
- détermination à partir de la distance entre la face arrière du patin de frein et la face d'appui de la première portion de fixation sur le point fixe, de l'angle requis entre les deux parties de la deuxième branche après déformation plastique,
- détermination des dimensions du ressort et de la structure de la deuxième branche, de sorte que lors du montage du frein à disque muni du ressort de rappel dans le frein à disque, un pli se forme dans la deuxième branche et les parties de part et d'autre du pli forment l'angle requis.

### BRÈVE DESCRIPTION DES DESSINS

La présente invention sera mieux comprise sur la base de la description qui va suivre et des dessins en annexe sur lesquels:
La figure 1 est une vue en perspective d'un exemple de réalisation d'un ressort de rappel selon l'invention avant montage sur le frein,
La figure 2 est une vue en perspective du ressort de la figure 1 après montage sur le frein, le frein et le patin de frein étant omis,
La figure 3 est une vue en perspective du ressort de la figure 1 après montage sur le frein, le frein et le patin de frein étant représentés,
Les figures 4A à 4I sont des représentations du ressort dans différents états entre un état non monté sur le frein et un état monté sur le frein,
Les figures 5A et 5B sont des vues, de deux points de vues différents, en perspective d'un frein à disque équipé de deux patins de frein munis chacun des ressorts selon l'invention, l'étrier étant omis,
La figure 6 est une vue en perspective d'un ressort de rappel selon un autre exemple de réalisation,
La figure 7 est une vue en perspective du ressort de la figure 6 en cours de fabrication,
La figure 8 est une vue en perspective d'un ressort de rappel selon un autre exemple de réalisation,
Les figures 9A et 9B sont des vues de face d'une deuxième branche d'un ressort de rappel selon d'autres exemples de réalisation.

### EXPOSÉ DÉTAILLÉ DE MODES DE RÉALISATION PARTICULIERS

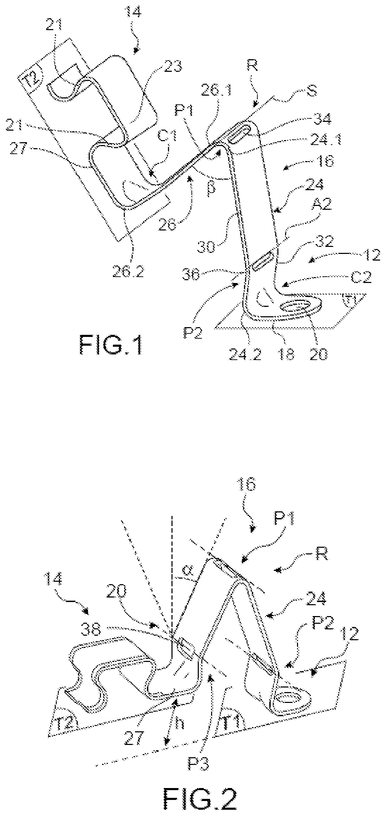

Sur la figure 1, on peut voir représenté en perspective un exemple de réalisation d'un ressort R de rappel de patin de frein pour frein à disque avant montage sur le patin et sur le frein. Deux ressorts R sont mis en œuvre par patin de frein.

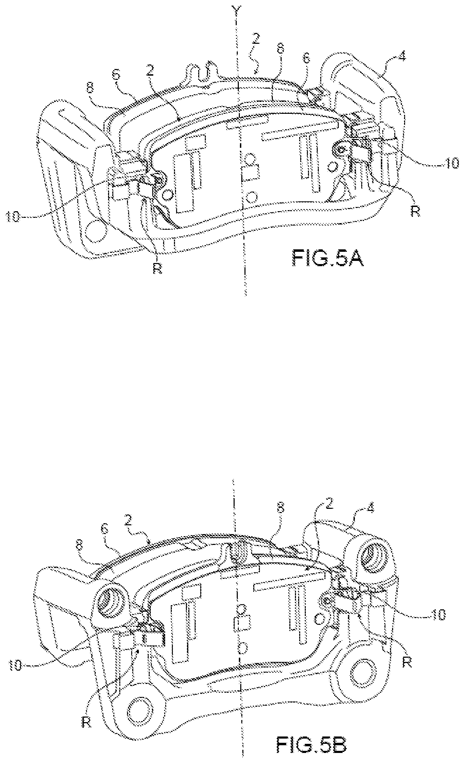

Sur les figures 2, 3 et 5A et 5B, on peut voir le même ressort à l'état monté entre un patin de frein 2 et une chape 4 d'un frein à disque à étrier flottant. L'étrier flottant n'est pas représenté pour des raisons de clarté. La chape 4 est destinée à être fixée sur un porte-fusée d'un véhicule automobile. Le patin de frein comporte une plaque 6 formant support et une garniture 8 destinée à venir en contact avec le disque de frein (non représenté). La garniture 8 subit une usure. La plaque 6 comporte par exemple deux oreilles 10 assurant son guidage en translation par rapport à la chape. Les ressorts R sont fixés sur plaque 6, chacun au niveau d'une extrémité de la plaque 6 disposée symétriquement par rapport à un axe de symétrie Y de la plaque.

Le ressort R comporte une première portion de fixation 12 à la plaque 6 du patin de frein, une deuxième portion de fixation 14 au frein, dans l'exemple représenté il s'agit de la chape 4, une troisième portion 16 reliant les première 12 et deuxième 14 portions et destinée à se déformer élastiquement et plastiquement au cours du fonctionnement du frein.

Dans l'exemple représenté, la première portion de fixation 12 comporte une patte 18 munie d'un trou 20 pour la fixation par sertissage sur la face arrière de la plaque 6 du patin de frein. En variante, le ressort R est fixé à la plaque du patin par bouterollage ou par vissage. La deuxième portion de fixation 14 est destinée à se fixer par encliquetage ou clipsage sur un bossage 22 de la chape, par exemple réalisé directement lors du moulage de la chape. Le bossage 22 comporte un pied étroit 22.1 rattaché à la chape et une tête large 22.2. La deuxième portion de fixation 14 forme une sorte de pince dont la forme intérieure correspond sensiblement à celle du bossage 22. La pince comporte deux pattes 21 recourbées l'une vers l'autre et reliées par une extrémité au moyen d'une bande 23 de métal. Ainsi, lorsque la deuxième portion de fixation 14 se rapproche du bossage, ce sont les extrémités des pattes recourbées l'une vers l'autre qui s'écartent élastiquement l'une de l'autre sous l'action de la tête 22.2 du bossage. Lorsque les pattes recourbées 21 ont dépassé la tête 22.2, elles se rapprochent l'une de l'autre par effet ressort.

Dans un autre exemple, la deuxième portion de fixation est fixée sur la chape par sertissage. En variante, la deuxième portion de fixation est fixée sur la chape par vissage ou par bouterollage par exemple.

La troisième portion 16 relie les première 12 et deuxième 14 portions de fixation.

La troisième portion a, vue de face, sensiblement une forme en V à l'envers, comportant une première branche et une deuxième branche 24, 26 attachées l'une à l'autre par une extrémité proximale 24.1, 26.1 au niveau d'un premier pli P1, et chacune des branches 24, 26 étant attachée à la première portion de fixation 12 et la deuxième portion de fixation 14 respectivement par une extrémité distale 24.2, 26.2. Le premier pli P1 s'étend selon un axe A1 orthogonal à l'axe des branches 24, 26. Le premier pli P1 est déformable plastiquement.

L'extrémité distale 26.2 de la deuxième branche 26 est rattachée à l'une des pattes 21 de la deuxième portion de fixation 14 par une bande 27.

La bande 27 est reliée à la deuxième branche 26 par un coude C1, et la patte 18 de la première portion de liaison 12 est reliée à première branche 24 par un coude C2. De manière avantageuse, les deux coudes comportent des raidisseurs 29, par exemple obtenus par pliage ou emboutissage pour former une rainure perpendiculaire à l'axe de coudes et raidissant les coudes. Dans un autre exemple de réalisation, seul l'un des deux coudes comporte un raidisseur.

La première branche 24 comporte un deuxième pli P2 s'étendant sensiblement perpendiculairement à la longueur de la première branche et délimitant deux parties 30, 32 formant un angle entre elles. Le pli P2 est déformable plastiquement.

Dans l'exemple représenté et de manière avantageuse, des fenêtres 34, 36 sont formées au niveau de premier et deuxième plis P1, P2 respectivement. Les fenêtres 34, 36 s'étendent dans l'axe des plis. Le choix de l'emplacement et des dimensions des fenêtres permet de définir la caractéristique en charge du ressort, i.e. la forme de la courbe de la caractéristique en charge et le niveau d'effort maximum atteignable par le ressort. En outre, les fenêtres assurent une localisation des plis lors de la fabrication du ressort.

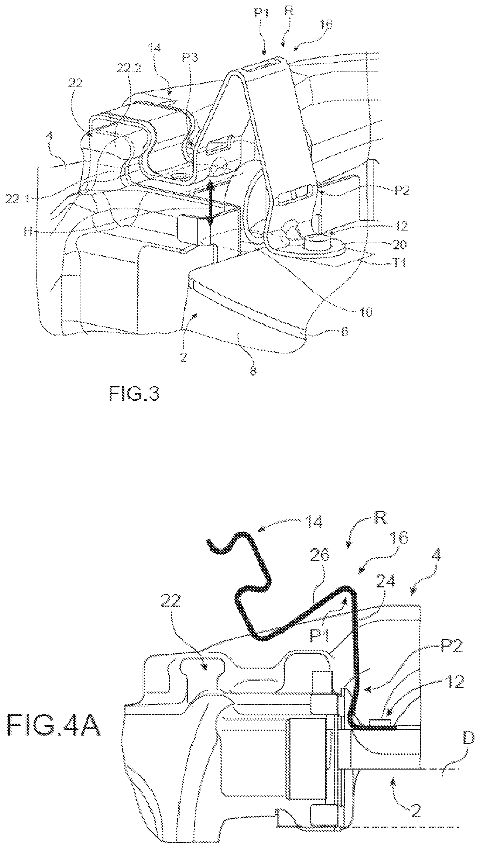

La deuxième branche 26 s'étend sensiblement dans un plan S. De préférence, la deuxième branche 26 comporte des moyens pour localiser le troisième pli P3 qui se formera lors du montage (figures 2 et 3). Dans l'exemple représenté sur les figures 1 à 8, les moyens de localisation du troisième pli P3 comportent une fenêtre 38 au niveau de l'emplacement souhaité du pli P3. La fenêtre 38 s'étend perpendiculairement à la longueur de la deuxième branche 26.

Les emplacements des plis P1, P2 et P3 interviennent dans le mécanisme de rattrapage d'usure.

La première portion de fixation 12 s'étend dans un plan T1.

La bande 27 entre la deuxième branche 26 et la deuxième portion de fixation 14 s'étend dans un plan T2.

A l'état non monté, les plans T1 et T2 sont sécants. A l'état monté entre le frein et le patin de frein, les plans T1 et T2 sont sensiblement parallèles et sont distants d'une distance h. Cette distance dépend de la distance H entre la face arrière de la plaque support du patin de frein et la face d'appui du point fixe du frein à disque, qui dépend du modèle de frein à disque.

A l'état non monté, l'angle β entre la première branche 24 et la deuxième branche 26 est au moins égal à égal à 10°, et très avantageusement égal à 13°. De préférence l'angle β est inférieur à 25° pour faciliter l'assemblage.

Plus l'angle β est élevé plus la précontrainte est grande. Un angle β compris entre 10° et 13° offre une force de rappel suffisante tout en permettant un montage aisé.

Par exemple, Le ressort est réalisé à partir d'une tôle d'acier à ressort. Il est fabriqué par découpage et pliage de sorte à former les différentes portions, et par estampage pour réaliser les fenêtres. Les raidisseurs sont formés par exemple par poinçonnage.

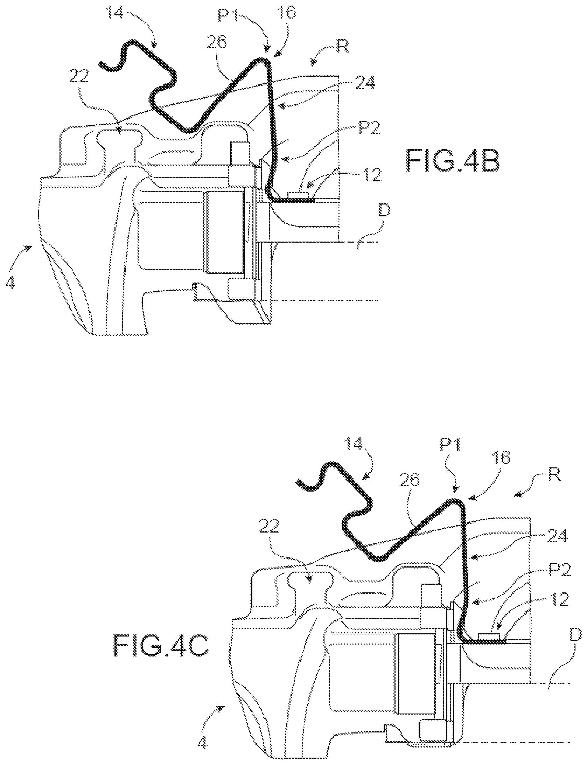

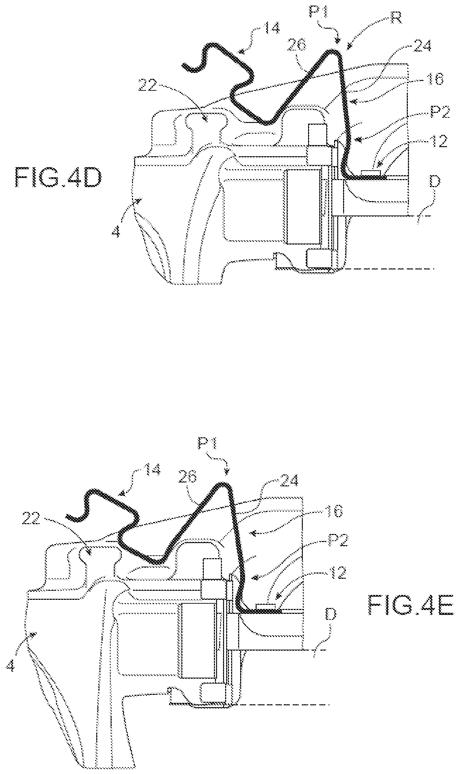

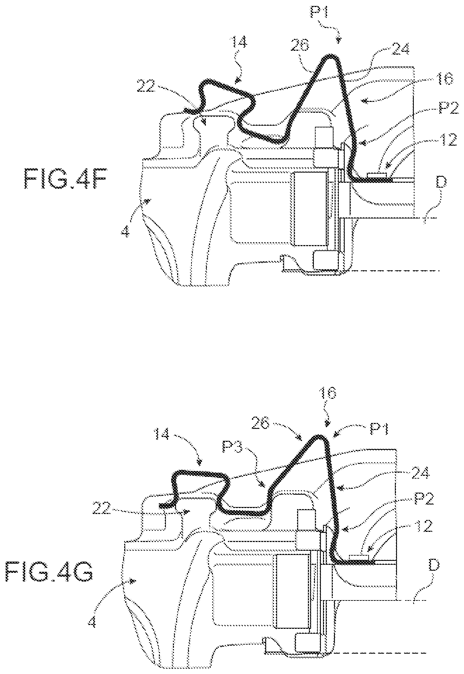

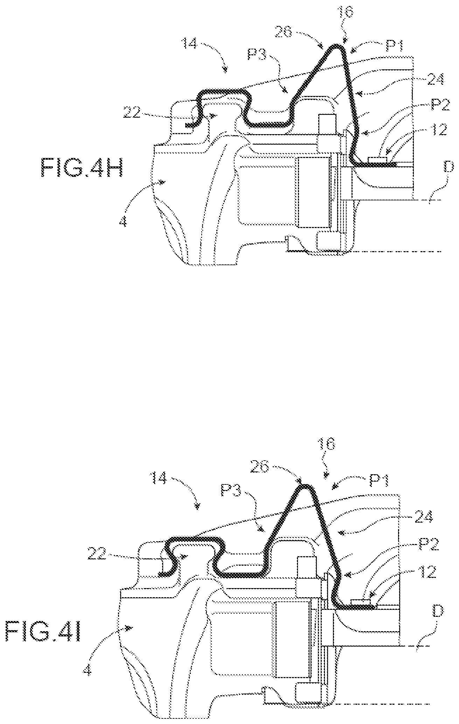

Le montage d'un patin de frein muni de deux ressorts de rappel selon l'invention va maintenant être décrit à l'aide des figures 4A à 41.

Nous allons décrire le montage des ressorts équipant les patins de frein sur un frein neuf, non encore monté sur un véhicule. Seul le montage d'un ressort sera décrit, mais le montage de l'autre ressort se fait de manière similaire.

Tout d'abord le ressort R est fixé sur la plaque du patin de frein par sa première portion de fixation 12, par exemple par sertissage.

En usine, le frein est monté sur une installation reproduisant un porte-fusée et un disque de frein. Le frein à disque est fixé sur l'installation par l'intermédiaire de la chape.

De préférence, le disque présente une épaisseur légèrement plus grande que celle des disques réels, par exemple de 500 µm, pour assurer le jeu de montage.

Le patin de frein est disposé dans le frein à l'emplacement dédié, et la garniture du patin de frein est plaquée contre la face du disque D représenté en pointillés (figure 4A). La deuxième portion de fixation 14 a une position écartée par rapport au bossage de la chape. Les plans T1 et T2 sont sécants.

La deuxième portion de fixation 14 est rapprochée du bossage, jusqu'à ce que la patte reliée directement à la bande 40 entre en contact avec le bossage (figures 4B à 4E).

Ensuit un effort supplémentaire est appliqué sur la deuxième portion de fixation 14 afin d'assurer l'encliquetage de la deuxième portion de liaison 14 sur le bossage.

Du fait des dimensions des branches, notamment de la deuxième branche 26, celle-ci se déforme plastiquement au niveau d'un troisième pli P3, ce pli permet d'ajuster la position de la deuxième portion de fixation 14 par rapport au bossage et de permettre l'encliquetage (figure 4F à 4H).

Enfin le ressort est complétement monté sur le bossage (figure 4I). La deuxième branche comporte alors deux parties séparées par le troisième pli P3 et formant un angle α. α est avantageusement compris entre 5° et 25° en fonction du procédé d'assemblage et des moyens d'assemblage, et de manière préférée entre 10° et 13°. La hauteur h entre les plan T1 et T2 est comprise par exemple entre 2mm et 15 mm en fonction du procédé d'assemblage et des moyens d'assemblage.

Dans l'état monté, les plans T1 et T2 sont sensiblement parallèles et distants d'une distance h qui dépend du modèle de frein à disque.

Le montage du frein et sa déformation plastique assurent alors que les ressorts sont directement dans un état préchargé. Ainsi dès la première utilisation du frein, les ressorts R assurent leur fonction de rappel. Les ressorts ont une action symétrique sur le patin de frein par rapport à l'axe Y et assure un rappel du patin sensiblement parallèle au disque.

Lors du montage, la garniture est maintenue plaquée contre le disque. A la fin du montage, lorsque le patin de frein n'est plus maintenu, celui-ci s'éloigne du disque de frein sous l'action du rappel élastique exercé par les deux ressorts R, et prend sa position de fonctionnement.

Le niveau de précharge du ressort de rappel dépend de l'angle α et de la hauteur H. la hauteur H étant fixée par conception du frein, on conçoit le ressort de sorte que la deuxième branche 26 présente l'angle permettant d'avoir la précharge souhaitée.

Le tableau à double entrée T1 ci-dessous regroupe des mesures de l'effort de précharge réalisées sur des ressorts pour lesquels à l'état monté sur un frein à disque donné, la hauteur H a une valeur entre -4 mm et 6 mm et l'angle α a une valeur entre -25° et 10°. H correspond à la distance entre le point d'appui du ressort sur la chape et le point de rivetage du ressort sur la plaque support. Suivant la forme de la chape, H varie.

Sur le tableau T2 les valeurs de l'effort de précharge ont été remplacées par des symboles indiquant si ces valeurs sont optimales (symbole +), acceptables (symbole o) ou non acceptables (symbole -). Il est alors possible, pour un modèle de frein donné pour lequel la hauteur H est fixé, de savoir si l'angle α obtenu à la fin du montage du ressort est optimal ou au moins acceptable et si le ressort est adapté au modèle de frein donné.

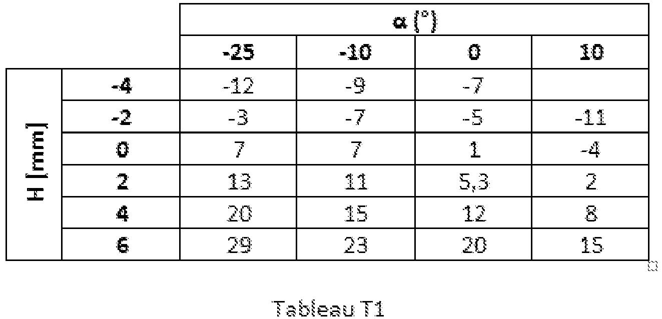

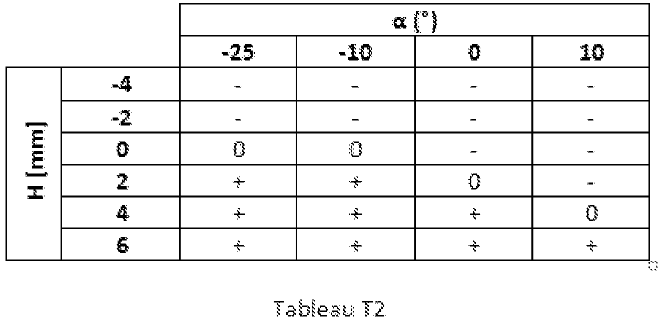

Lors du fonctionnement, le ressort se déforme plastiquement au niveau des plis P1, P2, P3 au fur et à mesure de l'usure des garnitures de frein, assurant par rappel élastique une position reculée de la garniture sensiblement identique pendant tout le fonctionnement du frein avec cette garniture. Les positions relatives des branches 24, 26 et des parties des branches 24, 26 sont modifiées.

Dans l'exemple représenté, le ressort est monté sur la chape d'un frein à disque à étrier flottant. Dans un autre exemple, il est monté sur un frein à étrier fixe, le ressort est alors fixé sur l'étrier ou sur un point fixe du véhicule distinct de l'étrier.

Dans le cas d'un remplacement de patins de frein sur un frein déjà monté sur un véhicule, le montage se fait de la même manière après avoir retiré les patins de frein usagés. La garniture est mise en appui contre le disque de frein et la deuxième portion de liaison du ressort de rappel est rapprochée du bossage de la chape jusqu'à encliquetage, ce qui provoque simultanément la déformation plastique de la deuxième branche 26 au niveau du pli P3, et la précharge du ressort de rappel.

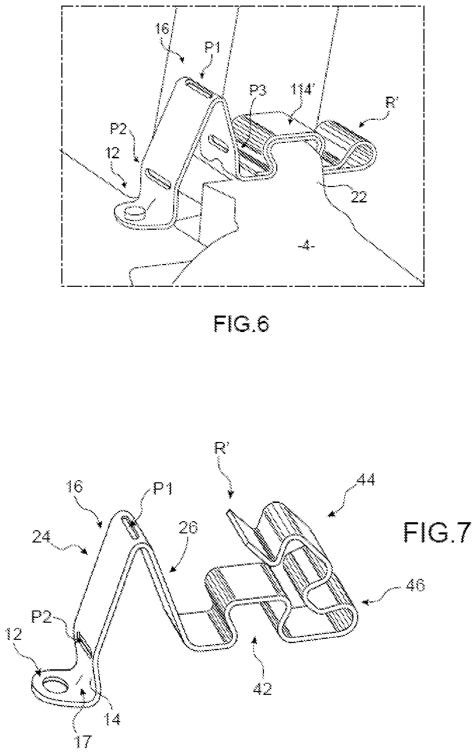

Sur la figure 6, on peut voir un autre exemple de ressort de rappel R' selon l'invention qui diffère de celui de la figure 1 en ce que la deuxième portion de fixation 114 présente une épaisseur double par rapport à celle de la figure 1, ce qui permet avantageusement d'accroître sa rigidité, et donc d'offrir un effort de serrage plus élevé, afin d'assurer une fixation améliorée du ressort sur le point fixe. La deuxième portion de liaison comporte deux épaisseurs de tôles. Comme illustré sur la figure 7, le ressort avant montage comporte une quatrième portion 42 conformée comme la deuxième portion de fixation 14, une cinquième portion 44 conformée comme la troisième portion 42 et reliée à celle-ci par une portion de bande formant charnière 46. La cinquième portion 44 est rabattue sur la quatrième portion 42 en la pivotant autour de la charnière 46, de sorte à ce qu'elles entrent en contact entre elles et forment une deuxième portion de fixation 114 d'épaisseur double.

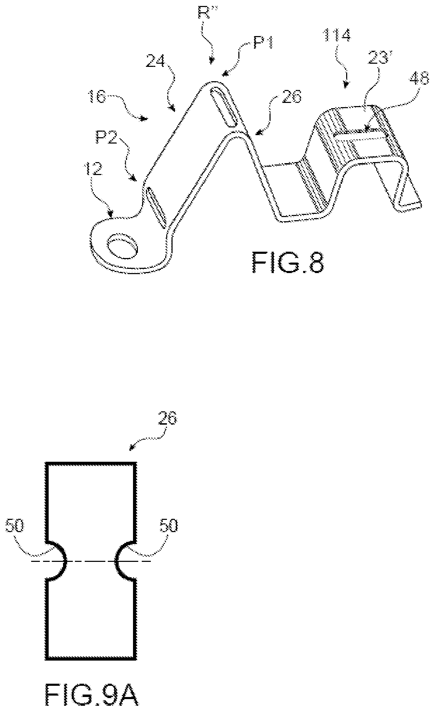

Dans un autre exemple de réalisation d'un ressort de rappel R" représenté sur la figure 8, la deuxième liaison de fixation 114 est écrouie. Par exemple, la bande de liaison 23' est frappée pour en réduire l'épaisseur et réaliser un écrouissage. De préférence, une portion centrale 48 de la bande de liaison est frappée pour en réduire l'épaisseur. La limite élastique de la deuxième liaison de fixation est alors augmentée, la deuxième liaison de fixation peut alors être sollicitée de manière plus importante tout en limitant les risques de déformation permanente lors du montage du ressort sur le point fixe.

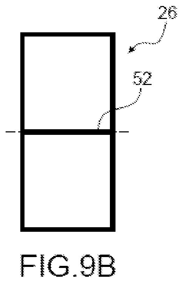

Sur les figures 9A et 9B, on peut voir d'autres exemples de moyens de localisation du troisième pli P3 forme sur la deuxième branche 26.

Sur la figure 9A, les moyens de localisation comportent deux encoches 50 formées en regard dans les bords latéraux de la deuxième branche 26 et alignés le long de l'axe du pli P3 à former.

Sur la figure 9B, les moyens de localisation comportent un marquage 52 le long de l'axe du pli P3 à former, par exemple réalisé par frappe.

Selon un autre exemple, la présence du raidisseur 29 du coude C2 permet de localiser le pli P3 au plus près du raidisseur.

### Nomenclature

2 patin de frein
4 chape
6 plaque support
8 garniture de freinage
10 oreille de patin de frein
12 première portion de fixation
14 deuxième portion de fixation
16 troisième portion
18 patte
20 trou
21 pattes recourbées
22 bossage
22.1 pied de bossage
22.2 tête de bossage
23 bande
23' bande
24 première branche
24.1 extrémité proximale
24.2 extrémité distale
26 deuxième branche
26.1 extrémité proximale
26.2 extrémité distale
27 bande
30, 32 parties de la première branche 24
34, 36 fenêtres
38 fenêtre
42 quatrième portion
44 cinquième portion
46 sixième portion
48 portion centrale
50 encoches
52 marquage
A1 axe du pli P1
A2 axe du pli P2
C1, C2 coudes
h distance entre les plans T1 et T2
H distance entre la face arrière de la plaque support du patin de frein et la face d'appui du point fixe
P1 premier pli
P2 deuxième pli
P3 troisième pli
R ressort selon un premier exemple
R' ressort selon un deuxième exemple
R" ressort selon un troisième exemple
S plan
T1, T2 plans
Y axe de symétrie de la plaque 6

## Revendications

1. Ressort de rappel d'un patin de frein à disque destiné à être monté entre le patin et un point fixe, ledit ressort étant configuré pour, après montage dans le frein à disque, se déformer élastiquement de sorte à rappeler le patin de frein en une position reculée par rapport au disque de frein après une phase de freinage, et à se déformer plastiquement pour compenser l'usure d'un ensemble formé par le disque de frein et d'une garniture du patin de frein, dans lequel le ressort comporte une première portion de fixation (12) au patin de frein, un deuxième portion de fixation (14) au point fixe, et une troisième portion (16) reliant la première portion de fixation (12) et la deuxième portion de fixation (14), ladite troisième portion (16) ayant sensiblement la forme d'un V comportant une première branche (24) et une deuxième branche (26) reliées par un premier pli (P1), les extrémités libres des première et deuxième branches respectivement étant reliées respectivement à la première portion de fixation (12) et à la deuxième portion de fixation (14), dans lequel la première branche (24) comporte un deuxième pli (P2) transversal à un axe longitudinal de la première branche (24) de sorte que la première branche (24) comporte deux parties dans deux plans différents, et **caractérisé en ce que**, avant montage, la deuxième branche (26) est sensiblement plane et est telle que, lors de la fixation de la deuxième portion de fixation (14) sur le point fixe, ladite deuxième branche (26) se déforme plastiquement le long d'un troisième pli (P3) de sorte que la deuxième branche (26) après montage comporte deux parties dans deux plans différents.

2. Ressort de rappel selon la revendication 1, dans lequel l'angle saillant (β) entre la première et la deuxième branche est au moins égal à 10° et est inférieur à 25°.

3. Ressort de rappel selon la revendication 1 ou 2, dans lequel la face de la première portion de fixation destinée à venir en appui sur le patin de frein et la face de la deuxième portion de fixation destinée à venir en appui sur le point fixe sont séparées d'une distance (h) comprise entre 2 mm et 15 mm et l'angle (a) formé entre les deux parties de la deuxième branche après formation du troisième pli (P3) est compris entre 10° et 25°.

4. Ressort de rappel selon la revendication 1, 2 ou 3, dans lequel la deuxième branche (26) comporte des moyens de localisation pour localiser le troisième pli (P3) à un emplacement donné.

5. Ressort de rappel selon la revendication 4, dans lequel les moyens de localisation comportent une fenêtre s'étendant le long de l'axe du troisième pli (P3).

6. Ressort de rappel selon la revendication 4, dans lequel les moyens de localisation comportent deux encoches (50) formées dans des bords latéraux de la deuxième branche (26) alignées le long de l'axe du troisième pli (P3), ou un marquage mécanique (52) de la deuxième branche (26) le long de l'axe du troisième pli (P3).

7. Ressort de rappel selon l'une des revendications 1 à 6, dans lequel la première branche (24) comporte une fenêtre au niveau du deuxième pli (P2) et dans lequel une fenêtre est formée au niveau du premier pli (P1).

8. Ressort de rappel selon l'une des revendications 1 à 7, dans lequel la deuxième portion de fixation (16) comporte une pince destinée à se fixer sur le point fixe par encliquetage.

9. Patin de frein comportant une plaque support (6), une garniture de freinage (8) fixée sur une face de la plaque support (6) et deux ressorts de rappel selon l'une des revendications précédentes, lesdits ressorts de rappel étant fixés sur une face de la plaque support (6) opposée à celle portant la garniture de freinage (8), par la première portion de fixation (12), les ressorts étant notamment sertis sur la plaque support (6).

10. Frein à disque comportant un actionneur et deux patins de frein selon la revendication 9.

11. Frein à disque selon la revendication 10, dans lequel l'angle entre les deux parties de la deuxième branche est compris entre 10° et 13°.

12. Frein à disque selon la revendication 10 ou 11, comportant une chape destinée à être fixée sur un porte-fusée d'un véhicule automobile et un étrier flottant, lesdits ressorts étant fixés sur l'étrier par leur deuxième portion de fixation.

13. Frein à disque selon la revendication précédente, dans lequel l'étrier comporte des bossages coopérant avec les deuxièmes portions de fixation par encliquetage.

14. Procédé de fabrication d'un frein à disque selon l'une des revendications 10 à 13, comportant :
- la mise en place d'au moins un patin de frein dans le frein à disque,
- mise en appui de la garniture contre une face d'une pièce formant un disque de frein ou simulant un disque de frein,
- le rapprochement de la deuxième portion de fixation de chaque ressort vers un point fixe, et déformation plastique simultanée de la deuxième branche de sorte à faire apparaître le deuxième pli et à précharger chaque ressort.

15. Procédé de conception d'un ressort de rappel selon l'une des revendications 1 à 8 d'un patin de frein dans un frein à disque donné, connaissant la distance (H) entre la face arrière du patin de frein et la face d'appui de la première portion de fixation sur le point fixe :
- détermination de la précharge à appliquer au ressort,
- détermination à partir de la distance (H) entre la face arrière du patin de frein et la face d'appui de la première portion de fixation sur le point fixe, de l'angle (a) requis entre les deux parties de la deuxième branche (26) après déformation plastique,
- détermination des dimensions du ressort et de la structure de la deuxième branche, de sorte que lors du montage du frein à disque muni du ressort de rappel dans le frein à disque, un pli (P3) se forme dans la deuxième branche (26) et les parties de part et d'autre du pli forment l'angle (a) requis.

## Patentansprüche

1. Rückstellfeder eines Bremsklotzes einer Scheibenbremse, die dazu bestimmt ist, zwischen dem Bremsklotz und einem Festpunkt montiert zu sein, wobei die Feder dazu konfiguriert ist, sich nach der Montage in der Scheibenbremse elastisch zu verformen, um den Bremsklotz nach einem Bremsvorgang in eine in Bezug auf die Scheibenbremse zurückgezogene Stellung zurückzustellen, und sich plastisch zu verformen, um den Verschleiß einer Anordnung zu kompensieren, die aus der Scheibenbremse und einem Belag des Bremsklotzes gebildet wird, wobei die Feder einen ersten Abschnitt (12) zur Befestigung an dem Bremsklotz, einen zweiten Abschnitt (14) zur Befestigung an dem Festpunkt und einen dritten Abschnitt (16), der den ersten Befestigungsabschnitt (12) mit dem zweiten Befestigungsabschnitt (14) verbindet, umfasst, wobei der dritte Abschnitt (16) im Wesentlichen eine V-Form aufweist, die einen ersten Arm (24) und einen zweiten Arm (26) umfasst, die durch einen ersten Knick (P1) miteinander verbunden sind, wobei die freien Enden des ersten und des zweiten Arms jeweils mit dem ersten Befestigungsabschnitt (12) bzw. mit dem zweiten Befestigungsabschnitt (14) verbunden sind, wobei der erste Arm (24) einen zweiten Knick (P2) quer zu einer Längsachse des ersten Arms (24) umfasst, sodass der erste Arm (24) zwei Teile in zwei unterschiedlichen Ebenen umfasst, und **dadurch gekennzeichnet, dass** der zweite Arm (26) vor der Montage im Wesentlichen eben ist und derart ist, dass sich der zweite Arm (26) bei der Befestigung des zweiten Befestigungsabschnitts (14) an dem Festpunkt entlang eines dritten Knicks (P3) plastisch verformt, sodass der zweite Arm (26) nach der Montage zwei Teile in zwei unterschiedlichen Ebenen umfasst.

2. Rückstellfeder nach Anspruch 1, wobei der Schrägwinkel (β) zwischen dem ersten und dem zweiten Arm mindestens 10° und weniger als 25° beträgt.

3. Rückstellfeder nach Anspruch 1 oder 2, wobei die Fläche des ersten Befestigungsabschnitts, die dazu bestimmt ist, an dem Bremsklotz zur Anlage zu kommen, und die Fläche des zweiten Befestigungsabschnitts, die dazu bestimmt ist, an dem Festpunkt zur Anlage zu kommen, um einen Abstand (h), der zwischen 2 mm und 15 mm beträgt, voneinander getrennt sind und der nach der Bildung des dritten Knicks (P3) zwischen den zwei Teilen des zweiten Arms gebildete Winkel (α) zwischen 10° und 25° beträgt.

4. Rückstellfeder nach Anspruch 1, 2 oder 3, wobei der zweite Arm (26) Lokalisierungsmittel umfasst, um den dritten Knick (P3) an einem gegebenen Ort zu lokalisieren.

5. Rückstellfeder nach Anspruch 4, wobei die Lokalisierungsmittel ein Fenster umfassen, das sich entlang der Achse des dritten Knicks (P3) erstreckt.

6. Rückstellfeder nach Anspruch 4, wobei die Lokalisierungsmittel zwei Einkerbungen (50), die in Seitenrändern des zweiten Arms (26) gebildet und entlang der Achse des dritten Knicks (P3) ausgerichtet sind, oder eine mechanische Markierung (52) des zweiten Arms (26) entlang der Achse des dritten Knicks (P3) umfassen.

7. Rückstellfeder nach einem der Ansprüche 1 bis 6, wobei der erste Arm (24) ein Fenster im Bereich des zweiten Knicks (P2) umfasst und wobei ein Fenster im Bereich des ersten Knicks (P1) gebildet ist.

8. Rückstellfeder nach einem der Ansprüche 1 bis 7, wobei der zweite Befestigungsabschnitt (16) eine Klammer umfasst, die dazu bestimmt ist, durch Einrasten an dem Festpunkt befestigt zu werden.

9. Bremsklotz, der eine Halteplatte (6), einen Bremsbelag (8), der an einer Fläche der Halteplatte (6) befestigt ist, und zwei Rückstellfedern nach einem der vorhergehenden Ansprüche umfasst, wobei die Rückstellfedern durch den ersten Befestigungsabschnitt (12) an einer Fläche der Halteplatte (6) befestigt sind, die zu derjenigen, die den Bremsbelag (8) trägt, entgegengesetzt ist, wobei die Rückstellfedern insbesondere auf die Halteplatte (6) aufgecrimpt sind.

10. Scheibenbremse, die ein Betätigungselement und zwei Bremsklötze nach Anspruch 9 umfasst.

11. Scheibenbremse nach Anspruch 10, wobei der Winkel zwischen den zwei Teilen des zweiten Arms zwischen 10° und 13° beträgt.

12. Scheibenbremse nach Anspruch 10 oder 11, die einen Träger, der dazu bestimmt ist, an einem Achsschenkel eines Kraftfahrzeugs befestigt zu sein, und einen Schwimmsattel umfasst, wobei die Federn durch ihren zweiten Befestigungsabschnitt an dem Sattel befestigt sind.

13. Scheibenbremse nach dem vorhergehenden Anspruch, wobei der Sattel Buckel umfasst, die durch Einrasten mit den zweiten Befestigungsabschnitten zusammenwirken.

14. Verfahren zur Fertigung einer Scheibenbremse nach einem der Ansprüche 10 bis 13, das Folgendes umfasst:
- Anbringen mindestens eines Bremsklotzes in der Scheibenbremse,
- Anlegen des Belags an eine Fläche eines Teils, das eine Scheibenbremse bildet oder eine Scheibenbremse simuliert,
- Annähern des zweiten Befestigungsabschnitts jeder Feder an einen Festpunkt und gleichzeitiges plastisches Verformen des zweiten Arms, um den zweiten Knick zu erzeugen und jede Feder vorzuspannen.

15. Verfahren zur Auslegung einer Rückstellfeder nach einem der Ansprüche 1 bis 8 eines Bremsklotzes in einer gegebenen Scheibenbremse, unter Kenntnis des Abstands (H) zwischen der rückwärtigen Fläche des Bremsklotzes und der Anlagefläche des ersten Befestigungsabschnitts an dem Festpunkt:
- Bestimmen der auf die Feder anzuwendenden Vorspannung,
- Bestimmen, anhand des Abstands (H) zwischen der rückwärtigen Fläche des Bremsklotzes und der Anlagefläche des ersten Befestigungsabschnitts an dem Festpunkt, des Winkels (α), der nach der plastischen Verformung zwischen den zwei Teilen des zweiten Arms (26) erforderlich ist,
- Bestimmen der Maße der Feder und der Struktur des zweiten Arms derart, dass bei der Montage der Scheibenbremse, die über die Rückstellfeder in der Scheibenbremse verfügt, ein Knick (P3) in dem zweiten Arm (26) gebildet wird und die Teile zu beiden Seiten des Knicks den erforderlichen Winkel (α) bild

## Claims

1. Disc brake pad return spring to be mounted between the pad and a fixed point, said spring being configured to, after mounting in the disc brake, elastically deform such as to return the brake pad to a retracted position in relation to the brake disc after a braking phase, and deform plastically to compensate for the wear of an assembly formed by the brake disk and a brake pad lining, wherein the spring includes a first portion (12) fixed to the brake pad, a second portion (14) fixed to the fixed point, and a third portion (16) connecting the first fixed portion (12) and the second fixed portion (14), said substantially V-shaped third portion (16) including a first leg (24) and a second leg (26) connected by a first fold (P1), the free ends of the first and second legs respectively being connected respectively to the first fixed portion (12) and to the second fixed portion (14), wherein the first leg (24) includes a second fold (P2) transverse to a longitudinal axis of the first leg (24) such that the first leg (24) includes two parts in two different planes, and **characterized in that**, before mounting, the second leg (26) is substantially planar and is such that when the second fixed portion (14) is fixed to the fixed point, said second leg (26) deforms plastically along a third fold (P3) such that the second leg (26), after mounting, includes two parts in two different planes.

2. Return spring according to claim 1, wherein the saliant angle (β) between the first and second legs is at least equal to 10° and is less than 25°.

3. Return spring according to claim 1 or 2, wherein the face of the first fixed portion intended to bear against the brake pad and the face of the second fixed portion intended to bear against the fixed point are separated by a distance (h) comprised between 2 mm and 15 mm and the angle (α) formed between the two parts of the second leg after the formation of the third fold (P3) is comprised between 10° and 25°.

4. Return spring according to claim 1, 2 or 3, wherein the second leg (26) includes locating means to locate the third fold (P3) at a given location.

5. Return spring according to claim 4, wherein the locating means include a window extending along the axis of the third fold (P3).

6. Return spring according to claim 4, wherein the locating means include two notches (50) formed in lateral edges of the second leg (26) aligned along the axis of the third fold (P3), or a mechanical marking (52) of the second leg (26) along the axis of the third fold (P3).

7. Return spring according to one of claims 1 to 6, wherein the first leg (24) includes a window at the second fold (P2) and wherein a window is formed at the first fold (P1).

8. Return spring according to one of claims 1 to 7, wherein the second fixed portion (16) includes a clamp for snap-fit attachment to the fixed point.

9. Brake pad including a support plate (6), a brake lining (8) fixed to one face of the support plate (6) and two return springs according to one of the preceding claims, said return springs being fixed to one face of the support plate (6) opposite the one carrying the brake lining (8), by the first fixed portion (12), the springs being in particular crimped onto the support plate (6).

10. Disc brake including an actuator and two brake pads according to claim 9.

11. Disc brake according to claim 10, wherein the angle between the two parts of the second leg is comprised between 10° and 13°.

12. Disc brake according to claim 10 or 11, including a clevis to be fixed to a stub axle of a motor vehicle and a floating calliper, said springs being fixed to the calliper by their second fixed portion.

13. Disc brake according to the preceding claim, wherein the calliper includes bosses cooperating with the second fixed portions in a snap-fit manner.

14. Method for manufacturing a disc brake according to one of claims 10 to 13, including:
- placing at least one brake pad in the disc brake,
- placing the lining against a face of a part forming a brake disc or simulating a brake disc,
- moving the second fixed portion of each spring towards a fixed point, and simultaneously plastically deforming the second leg so as to expose the second fold and pre-load each spring.

15. Method for designing a return spring according to one of claims 1 to 8 of a brake pad in a given disc brake, knowing the distance (H) between the rear face of the brake pad and the bearing face of the first fixed portion against the fixed point:
- determining the pre-load to be applied to the spring,
- determining the angle (α) required between the two parts of the second leg (26) after plastic deformation from the distance (H) between the rear face of the brake pad and the bearing face of the first fixed portion against the fixed point,
- determining the dimensions of the spring and the structure of the second leg, such that when the disc brake provided with the return spring is mounted in the disc brake, a fold (P3) is formed in the second leg (26) and the parts on either side of the fold form the angle (α) required.
